# EUROPÄISCHE PATENTSCHRIFT

(11) **EP 1 434 740 B1**
(45) Veröffentlichungstag und Bekanntmachung des Hinweises auf die Patenterteilung: **06.05.2009**
(21) Anmeldenummer: 02782749.2
(22) Anmeldetag: 16.10.2002
(51) Int. Cl.: C02F 3/02, C02F 3/06

(54) **VORRICHTUNG ZUR BIOLOGISCHEN ABWASSERAUFBEREITUNG**
DEVICE FOR BIOLOGICAL TREATMENT OF WASTE WATER
DISPOSITIF DE TRAITEMENT BIOLOGIQUE DES EAUX USEES

(30) Priorität: 16.10.2001 DE 10150946
(43) Veröffentlichungstag der Anmeldung: 07.07.2004
(73) Patentinhaber: ACO SEVERIN AHLMANN GMBH & CO. KG, 24755 Rendsburg (DE)
(72) Erfinder: JEG, Judit, 41472 Neuss (DE); MASCHKE, Lutz, 41469 Neuss (DE); SCHÄFER, Friedrich, 65558 Cramberg (DE); DIEFENBACH, Günter, 36269 Philippsthal (DE)
(74) Vertreter: Bohnenberger, Johannes
(86) Internationale Anmeldenummer: PCT/DE2002/003997
(87) Internationale Veröffentlichungsnummer: WO 2003/033419

(56) Entgegenhaltungen:
- EP-A- 0 680 935
- DE-C- 19 512 907
- DE-C- 19 633 889
- PATENT ABSTRACTS OF JAPAN vol. 018, no. 233 (C-1195), 28. April 1994 (1994-04-28) & JP 06 023382 A (EBARA INFILCO CO LTD;OTHERS: 01), 1. Februar 1994 (1994-02-01)

## Beschreibung

Die Erfindung betrifft eine Vorrichtung zur biologischen Abwasseraufbereitung nach Anspruch 1

Schmutz- und Niederschlagsabwässer sind möglichst unverzüglich, d.h. in frischem Zustand, sowie möglichst in freiem Gefälle aus dem Bereich der Siedlungen und der gewerblichen und industriellen Einrichtungen so abzuführen, dass für Mensch und Natur kein Schaden entsteht. Dabei kann insbesondere zwischen kommunalem Schmutzwasser, bestehend aus häuslichem (Schmutzwasser aus Küchen, Waschküchen, Waschräumen, Baderäumen, Aborträumen und ähnlich genutzten Räumen), gewerblichem (Schmutzwasser aus Gewerbebetrieben) und industriellem (allen wässrigen Abgängen, die bei der industriellen Gewinnung, Verarbeitung und Herstellung von Rohstoffen und Gütern entstehen) Schmutzwasser unterschieden werden. Nach deutschen Industrienormen (DIN 1986 Teil 1.8.7) sind in Betrieben, in denen fetthaltiges Wasser anfällt, Fettabscheider nach DIN 4040 einzubauen. Vereinfacht bedeutet dies, dass fetthaltige oder ölhaltige Abwässer im kommunalen oder industriellen Bereich über Abscheideanlagen, bestehend aus Schlammfang und dem eigentlichen Fettabscheider, in die Kanalisation abzuleiten sind. Grundlage für Bemessung, Einbau und Betrieb ist die DIN 4040 in allen ihren Teilen.

Dadurch, dass Fette und Öle in Kanalsystemen und Kläranlagen in vielfältiger Weise problematische Substanzen darstellen,
werden hier für die Abwässer bestimmte Grenzwerte festgelegt, die am Ablauf der Abscheideanlage gemessen werden. Im Vordergrund stehen lipophile Stoffe, d.h. der Anteil an Restfett, das vom Abscheider nicht zurückgehalten wird. Ein weiterer Summenparameter, der von den Kommunen oft herangezogen wird, ist der CSB-Wert (chemischer Sauerstoffbedarf). Die Grenzwerte für die lipophilen Stoffe liegen gemäß Vorgaben des ATV-DVWK (Deutsche Vereinigung für Wasserwirtschaft, Abwasser und Abfall e.V.) bei 250 mg pro Liter, und für den chemischen Sauerstoffbedarf bei 600 mg pro Liter.

Allerdings werden im Rahmen der kommunalen Selbstverwaltung andere Grenzwerte in den Abwassersatzungen festgeschrieben. Insbesondere wird die Einleitung von lipophilen Stoffen teilweise auf Werte von 50 bis 100 mg/Liter begrenzt. Bei Überschreitung drohen dem Betreiber Starkverschmutzerzuschläge. Die heutigen Abscheideanlagen sind, auch wenn es sich um moderne Konstruktionen handelt, nicht in der Lage den geforderten Grenzwert von 250 mg/l oder darunter einzuhalten.

Einer der Gründe ist in der Verwendung moderner Reinigungs-/Desinfektionsmittel im Küchenbereich zu sehen. Dieser Effekt wird durch Überdosierung der genannten Mittel noch verstärkt. Moderne Reiniger bilden äußerst stabile Emulsionen, so dass das physikalische Prinzip der Trennung von Flüssigkeiten durch unterschiedliche Dichten, nach dem alle Abscheider arbeiten, unterlaufen wird. Dies zeigt sich vor allem in einer differenzierten Analytik, bei der im Falle der lipophilen Stoffe, nach emulgierten und nicht emulgierten Fetten unterschieden wird. Dabei zeigt sich, dass nicht emulgierte Bestandteile (Fette) fast vollständig von modernen Abscheideanlagen zurückgehalten werden, während emulgierte Fette (Öle) den Abscheider fast ungehindert passieren und damit für die teilweise drastischen Grenzwertüberschreitungen verantwortlich sind.

Ein Ausweg zur Lösung dieses Problems besteht in einer Nachbehandlung der Abwässer hinter dem Abscheider. Aus dem Stand der Technik sind hier Flotationsanlagen zu nennen, welche mit Chemikalienzusatz nach dem Prinzip Flockung und Flotation arbeiten, oder reine Druckentspannungsflotationsanlagen.

Nachteilig bei diesen Verfahren sind aber die nicht unerheblichen Folgekosten an Chemikalieneinsatz bzw. die entstehenden Energiekosten. Die Flotatschwämme werden entweder in einem Stapelbehälter gesammelt oder direkt in den Abscheider zurückgeführt und zusammen mit den Fetten entsorgt.

Seit einiger Zeit werden alternativ Membranen als reine physikalische Verfahren zur Abwassernachbehandlung angeboten. In der Praxis zeigt sich jedoch, dass momentan zur Verfügung stehende Membranen aufgrund der hohen Belastung anfällig gegen Störungen sind. Hier sind vor allem Verblockung und Foulingprozesse zu nennen. Dies bedingt einen erhöhten Wartungsaufwand, eine verkürzte Lebensdauer der Membranen, hohen Energieeinsatz und damit beträchtliche Betriebskosten. Ein weiterer Nachteil der Membranen besteht in der Empfindlichkeit gegenüber Stillstandszeiten der Anlage.

Eine weitere Möglichkeit besteht in der biologischen Nachbehandlung der Abwässer mittels einer Festbettbiologie. Zur Zeit werden diesbezüglich nur sehr wenige Konzepte auf dem Markt angeboten. Hier sind in erster Linie belüftete Tauchkörperbiologien zu nennen, die zum Teil mit einer Druckentspannungsflotation kombiniert werden. In der Praxis zeigt sich, dass damit auch die schärfsten Grenzwerte bezüglich lipophiler Stoffe unterschritten werden können. Als besonderer Nachteil erweist sich jedoch der enorme Platzbedarf dieser Anlagen, der einen nachträglichen Einbau in bestehende Gebäude oftmals unmöglich macht.

Aus der DE 196 33 889 C1 ist ein Bioreaktor zum Schadstoffabbau und zur Abwasserfilterung bekannt, bei welchem eine Entnahmeeinrichtung zum Entnehmen von gereinigtem Abwasser oberhalb der Wirbelschicht aber unterhalb eines Flüssigkeitsspiegels des Reaktorbehälters angeordnet ist. Die bekannte Anlage weist keine hinreichenden Reinigungseigenschaften auf.

Aus der DE 195 12 907 C ist eine Vorrichtung nach dem Oberbegriff des Patentanspruches 1 bekannt. Auch diese Vorrichtung weist keine hinreichende Reinigungswirkung auf.

Es ist Aufgabe der vorliegenden Erfindung, eine Vorrichtung zur biologischen Abwasseraufbereitung zur Verfügung zu stellen, welche die Abwassernachbehandlung auf der Basis einer einfachen und wirkungsvollen Konstruktion bei möglichst geringem Platzbedarf gewährleistet. Diese Aufgabe wird durch eine Vorrichtung nach Anspruch 1 gelöst.

Ein Kerngedanke der vorliegenden Erfindung besteht darin, die Aufgabe durch eine Vorrichtung zur biologischen Abwasseraufbereitung zu lösen, welche durch die Auslegung als Turmbiologie, d.h. eine im Wesentlichen vertikale Verfahrensführung gekennzeichnet ist. Diese Vorrichtung kann insbesondere zum Reinigen von Abwässern, die überwiegend mit Leichtstoffen, insbesondere Ölen und Fetten verunreinigt sind, eingesetzt werden.

Das Abwasser wird dabei aus der Fettabscheideanlage über einen Zulauf in einem auf die Nenngröße der Fettabscheideanlage ausgelegten Stapelbehälter zwischengespeichert und von dort automatisch in eine biologische Stufe gefördert. Diese besteht aus einem Reaktorbehälter, welcher eine Einlaufleitung zum Zuführen des Abwassers aus dem Stapelbehälter zu einem unteren Bodenbereich des Reaktorbehälters umfasst. Im unteren Bodenbereich ist mindestens eine Wirbelschicht derart angeordnet, dass diese vom einströmenden Abwasser durchströmt wird. In der Wirbelschicht werden Emulsionen mikrobiologisch abgebaut und sinken als Klärschlamm auf den Boden des Reaktorbehälters. Durch eine Gaseinführeinrichtung zum Einführen eines Gases, insbesondere von Luft unterhalb der Wirbelschicht wird durch die Gasblasen des eingeführten Gases zum einen die Strömung des einströmenden Abwassers verstärkt, zum anderen ein aerober Abbau emulgierter Fette in der Wirbelschicht gewährleistet. Oberhalb der Wirbelschicht, aber unterhalb eines Flüssigkeitsspiegels im Reaktorbehälter ist eine Entnahmeeinrichtung zum Entnehmen von gereinigtem Abwasser angeordnet. Über eine Rückführleitung kann Flüssigkeit oberhalb der Wirbelschicht entnommen und zum Stapelbehälter zurückgeführt werden. Dadurch wird insbesondere das Überschreiten eines maximalen Flüssigkeitsspiegels im Reaktorbehälter sicher vermieden, zum anderen kann eine Verdünnung des aus der Fettabscheideanlage zwischengespeicherten Abwassers mit schon gereinigtem Abwasser erzielt werden.

Durch die neuartige Anordnung der Wirbelschicht im Reaktorbehälter in der aufsteigenden und durch das eingetragene Gas verstärkten Strömung wird eine im Wesentlichen vertikale Prozessführung vorgenommen, welche gegenüber herkömmlichen Technologien eine wesentlich geringere Standfläche für den Reaktorbehälter notwendig macht. Gleichzeitig kann durch Anpassung der Wirbelschichtabmessungen sowie der Eindosierung des Gases über z.B. zeitgetaktete Membranen für einen besonders feinperligen Sauerstoffeintrag die Abwasseraufbereitung an spezifische Verschmutzungskomponenten und -Grade angepasst werden. Hierbei wird die Wirbelschicht in zwei, in vertikaler Richtung voneinander getrennte Bereiche unterteilt und die Gaseinführeinrichtung derart angeordnet, dass eine erste, von den Gasblasen und dem Abwasser nach oben durchströmte Wirbelschicht für aeroben Abbau und eine zweite, vom Abwasser nach unten durchströmte Wirbelschicht für anaeroben Abbau gebildet wird. Damit erweitert sich das Einsatzspektrum des beschriebenen Bioreaktors um den anaeroben Abbau weiterer Verschmutzungskomponenten ähnlich einem Teichverfahren (aerob-anaerob) zur Reinigung des Abwassers.

Bevorzugt werden dabei die erste und die zweite Wirbelschicht konzentrisch zueinander angelegt. Die Anordnung beider Wirbelschichten in dieser Art und Weise unterstützt dabei das erfindungsgemäße Konzept einer im Wesentlichen vertikalen Prozessführung (Turmbiologie) des hier beschriebenen Reaktors mit dem schon erwähnten Vorteil einer gegenüber herkömmlichen Abwasseraufbereitungsanlagen reduzierten Standfläche. Des weiteren wird durch die konzentrische Anordnung beider Wirbelschichten ein Aufbereitungskreislauf durch das Rückführen der die zweite Wirbelschicht verlassenden Abwässer zur ersten Wirbelschicht ermöglicht. Dadurch wird eine besonders intensive Abwasseraufbereitung sichergestellt.

In bevorzugter Weise umfasst die Wirbelschicht eine Füllung aus Festkörpern, die in einem umgrenzten Raum mit einer siebartigen oberen und/oder unteren Begrenzungsfläche gehalten sind. Durch die Füllung aus Festkörpern entsteht eine im Vergleich zum Durchtrittsquerschnitt der Strömung durch die Wirbelschicht sehr viel größere Abbaufläche für biologische Prozesse. Dabei können sowohl suspendierte Stoffe, kolloidal und echt gelöste organische und anorganische Stoffe hauptsächlich durch mikrobielle Stoffwechselprozesse aus dem Abwasser eliminiert oder in unschädliche Verbindungen umgewandelt werden. Für eine besonders effiziente Abwasseraufbereitung ist dabei grundsätzlich die Größe der Ansiedlungsfläche für Mikroorganismen entscheidend.

Von besonderem Vorteil ist deshalb, wenn die Festkörper zur Bildung von Bewuchsflächen, insbesondere als Kunststoffkörper ausgebildet sind. Kunststoff bieten dabei aufgrund seiner spezifischen Oberflächeneigenschaften das technische Gegenstück zu den mit Mikroorganismen besiedelten Krumen und Körnern des Bodens, die bei der Abwasserlandbehandlung die Reinigung bewirken.

Von besonderem Vorteil ist es weiterhin, wenn die Dichte der Festkörper nur wenig größer als 1 g/m³ ist. Damit sind die Festkörper nur etwas schwerer als Wasser, wodurch sie durch die in der Wirbelschicht aufsteigenden Strömung in der Schwebe gehalten werden können. Dadurch ist aber auch eine Bewegung der Festkörper in allen Freiheitsgraden gewährleistet, was zu einer guten Durchmischung des aufsteigenden Abwassers mit den Festkörpern führt, und wodurch wiederum der mikrobiologische Energiestoffwechsel zum Abbau insbesondere lipophiler Verunreinigungen gefördert wird.

In bevorzugter Weise werden die Begrenzungsflächen der Wirbelschicht als Lochblech ausgebildet. Zum einen wird dadurch der Reaktionsraum zur Nachbehandlung der Abwässer begrenzt, d.h. ein nicht erwünschtes Absinken bzw. zu weites Aufsteigen der Festkörper wird verhindert, zum anderen bilden sich hinter Lochblechen entsprechende Verwirbelungen, welche das aufsteigende Abwasser nicht auf kürzestem Wege durch die Wirbelschicht hindurchtreten lässt, sondern für eine gewisse Verweildauer und damit erhöhte Behandlungszeit für den intensiven mikrobiologischen Abbau sorgt. Die Größe der Löcher kann dabei so gewählt werden, dass zum einen der in der Wirbelschicht anfallende Klärschlamm problemlos durch die Begrenzungsfläche in den unteren Bodenbereich des Reaktors absinken kann, zum anderen die Festkörper in dem umgrenzten Bereich gehalten und der aufsteigenden Strömung kein zu großer Widerstand entgegengesetzt wird.

Ein weiterer Vorteil entsteht dadurch, dass die Entnahmeeinrichtung eine vom gereinigten Abwasser durchströmbare Membran fasst. Dadurch werden eventuell noch im Abwasser vorhandene Schwebeteilchen vor der Entnahme abgeschieden und sinken ebenfalls auf den Reaktorboden.

Für die Entnahme von gereinigtem Abwasser werden in bevorzugter Weise Pumpeinrichtungen zur Erzeugung eines Unterdrucks auf einer stromabwärts liegenden Seite der Membran eingesetzt. Damit ist eine gezielte Mengenentnahme von gereinigtem Abwasser aus dem Bioreaktor möglich. Gleichzeitig können durch die Pumpeinrichtungen eventuelle Höhenunterschiede zum Einlauf der Kanalisation überwunden werden.

In bevorzugter Weise umfassen die Pumpeinrichtungen Strömungsumkehreinrichtungen zum Rückspülen der Membran. Da sich beim Ansaugen des gereinigten Abwassers an der Außenseite der Membran üblicherweise Schwebeteilchen ansammeln, welche unter Umständen zu einer Blockade der Membran führen können, kann durch das Rückspülen der Membran mittels der Pumpeinrichtung eine einfache Reinigung erzielt werden.

Von besonderem Vorteil ist es weiterhin, wenn die Gaseinführeinrichtung Verteileinrichtungen, die insbesondere in Membrantechnik ausgebildet sind, und Pumpeinrichtungen zum Zuführen von Luft umfaßt. Die Verteileinrichtungen werden dabei als modernst verfügbare Membrantechnik ausgeführt, worüber der Sauerstoffeintrag durch eine Pumpe erfolgt. Ein besonders feinperliger Sauerstoffeintrag wird dadurch erzielt, daß eine zeitgetaktete Zuführung über eine regelbare Pumpe vorgenommen wird.

Die Steuerung der Auslastung des Bioreaktors wird vorzugsweise dadurch vorgenommen, daß Pumpeinrichtungen zum Zuführen des Abwassers vom Stapelbehälter zum Reaktorbehälter vorgesehen sind. Entsprechend der Menge anfallenden fetthaltigen Abwassers vom Fettabscheider kann so die Zufuhr zum Bioreaktor erhöht oder vermindert werden. Damit gekoppelt kann auch eine entsprechende Regelung der Gaseinführeinrichtung für höheren oder geringeren Gaseintrag in den Bioreaktor verbunden sein.

Von Vorteil ist weiterhin, wenn eine Schlammabzugseinrichtung zum Abziehen von Schlamm vom Bodenbereich des Reaktorbehälters und zu dessen Abführung insbesondere in den Stapelbehälter vorgesehen ist. Dafür kann z.B. die Pumpeinrichtung zum Zuführen des Abwassers vom Stapelbehälter zum Reaktorbehälter genutzt werden, welche rücklaufend betrieben wird.

Die Aufgabe wird weiterhin durch ein Verfahren zur biologischen Abwasseraufbereitung gelöst, welches die Verfahrensschritte a) Einleiten eines Gases, insbesondere von Luft, in Form feiner Gasblasen in das zu reinigende Abwasser, b) Führen des mit Gasblasen versetzten Abwassers durch eine Wirbelschicht oder erste Wirbelschicht, insbesondere für aeroben Abbau c) Filtern zumindest eines Hauptstromes des aus der Wirbelschicht bzw. ersten Wirbelschicht austretenden Abwassers mit Hilfe einer Membrane und d) Entnehmen des aus der Membrane austretenden Abwassers zur Weiterverwendung umfaßt. Unter anderem durch das Einleiten des Gases in das zu reinigende Abwasser entsteht eine aufwärts gerichtete Strömung, welche in der Wirbelschicht einer mikrobiologischen Behandlung unterworfen wird, so daß schließlich nach dem Austreten des dort gereinigten Abwassers eine mechanische Filterung vor der Entnahme zur Weiterverwendung ausreicht. Durch in der Wirbelschicht unter aeroben Bedingungen erfolgenden Abbau lipophiler Stoffe, insbesondere emulgierter Fette, fallen Klärschlämme an, welche entgegen der vertikalen Prozeßführung nach unten sinken und dort einfach entsorgt werden können.

Von Vorteil ist es weiterhin, wenn bei dem erfindungsgemäßen Verfahren vor dem Schritt b) die weiteren Schritte b1) Zuführen wenigstens eines Teilstromes des aus der ersten Wirbelschicht austretenden Abwassers durch eine zweite Wirbelschicht, insbesondere für anaeroben Abbau und b2) Rückführung des aus der zweiten Wirbelschicht austretenden Teilstromes des Abwassers zum Schritt a) durchgeführt werden. Damit wird das Aufbereitungsspektrum des Verfahrens auf einfache Weise in den anaeroben Bereich ausgeweitet, wodurch insbesondere eine Reduktion des Klärschlammes erzielt wird. Durch den mehrfachen Umlauf zumindest einer Teilmenge des Abwassers wird die Effizienz der Aufbereitung zum einen erhöht, zum anderen auf weitere Verunreinigungskomponenten ausgeweitet.

Da zu den Vorbedingungen für den Erfolg der biologischen Behandlung zunächst eine unkritische Grenzkonzentration von Schadstoffen vorliegen sollte, ist es von Vorteil, wenn bei dem erfindungsgemäßen Verfahren vor dem Schritt a) das zu reinigende Abwasser durch Vermischen eines Teilstromes des im wesentlichen aus der Wirbelschicht oder ersten Wirbelschicht austretenden Abwassers mit fetthaltigem Abwasser gebildet wird. Insbesondere bei sehr stark verschmutzten Abwässern kann ein solcher Kreisprozeß so lange durchgeführt werden, bis das gereinigte Abwasser in einer erwünschten Qualität vorliegt.

Im folgenden wird die Erfindung anhand von Ausführungsbeispielen näher erläutert. Es zeigen:
- Fig. 1: einen im Wesentlichen aus dem Stand der Technik bekannten Bioreaktor für aeroben Abbau; und
- Fig. 2: einen Bioreaktor für aeroben-anaeroben Abbau.

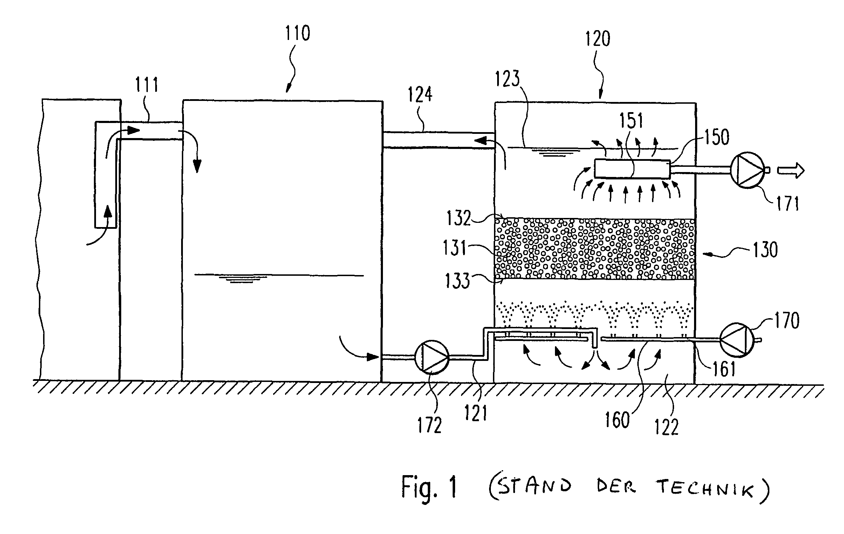

In Fig. 1 wird ein Stapelbehälter 110 über einen Zulauf 111 mit fetthaltigem Abwasser beschickt. An den Stapelbehälter 110 schließt sich ein Reaktorbehälter 120 an, in dessen unteren Bodenbereich 122 das Abwasser über eine Einlaufleitung 121 zugeführt wird. Das Abwasser füllt den Reaktorbehälter 120 bis zu einem Flüssigkeitsspiegel 123 unterhalb einer Rückführleitung 124 in den Stapelbehälter 110. In dem Reaktorbehälter 120 ist eine Wirbelschicht 130 angeordnet, in welcher, durch Begrenzungsflächen 132, 133 Festkörper 131 gehalten werden.

Oberhalb der Wirbelschicht 130 ist eine Entnahmeeinrichtung 150 mit einer Membran 151 vorgesehen, über welche das Klarwasser abgezogen werden kann. Unterhalb der Wirbelschicht 130 befindet sich eine Gaseinführeinrichtung 160 mit Verteileinrichtungen 161 zum Zuführen von feinperligen Luftblasen. Sowohl die Einlaufleitung 121 wie auch die Entnahmeeinrichtung 150 und die Gaseinführeinrichtung 160 sind mit entsprechenden Pumpeinrichtungen 170, 171 und 172 bestückt.

In dieser Ausführungsform der vorliegenden Erfindung bestehen die Festkörper 131 aus Kunststoffkörpern mit einer Dichte, die geringfügig über eins liegt. Auf der Oberfläche der Festkörper 131 siedeln sich Mikroben an, deren Stoffwechselprozesse zum Abbau fetthaltiger Emulsionen führen, bei denen Klärschlamm anfällt, welcher in den unteren Bodenbereich 122 des Reaktorbehälters 120 absinkt. Der feinperlige Lufteintrag über die Verteileinrichtungen 161 der Gaseinführeinrichtung 160 unterhalb der Wirbelschicht 130 sorgt zusammen mit der Abwasserzuführung über die Einlaufleitung 121 zu einer aufsteigenden Strömung, welche zur Verwirbelung der Festkörper 131 in der Wirbelschicht 130 und zu einem im wesentlichen aeroben Abbauprozeß führt. Die Begrenzungsflächen 132, 133 sind als Lochbleche ausgeführt, wobei das Volumen über dem oberen Lochblech als Beruhigungszone für die Strömung dient.

In dieser Zone wird das Klarwasser unter Filterung eventueller Schwebeteilchen mittels der Entnahmeeinrichtung über die Membran 151 mittels der Entnahmevorrichtung 150 in einen Zwischenspeicher abgezogen, und schließlich in die Kanalisation eingeleitet. Zur Säuberung der Membran 151 kann die Pumpeinrichtung 171 unter Verwendung des Zwischenspeichers im Rückspülbetrieb eingesetzt werden, wodurch eine frühzeitige Blockade der Membran 151 verhindert wird.

Über die Rückführleitung 124 vom Reaktorbehälter 120 in den Stapelbehälter 110 wird zuviel eingebrachtes Abwasser mit dem Vorteil der Vermischung des fetthaltigen Abwassers im Stapelbehälter 110 vor der Behandlung im Reaktorbehälter 120 zurückgeführt. Dadurch ist insbesondere eine Regelung der Pumpeinrichtung 172 für die Abwasserzuführung nicht unbedingt erforderlich. Diese kann bei Bedarf (hoher Abwasseranfall), insbesondere in Verbindung mit der verstärkten Gaszuführung über die Pumpeinrichtung 170 jedoch vorgenommen werden.

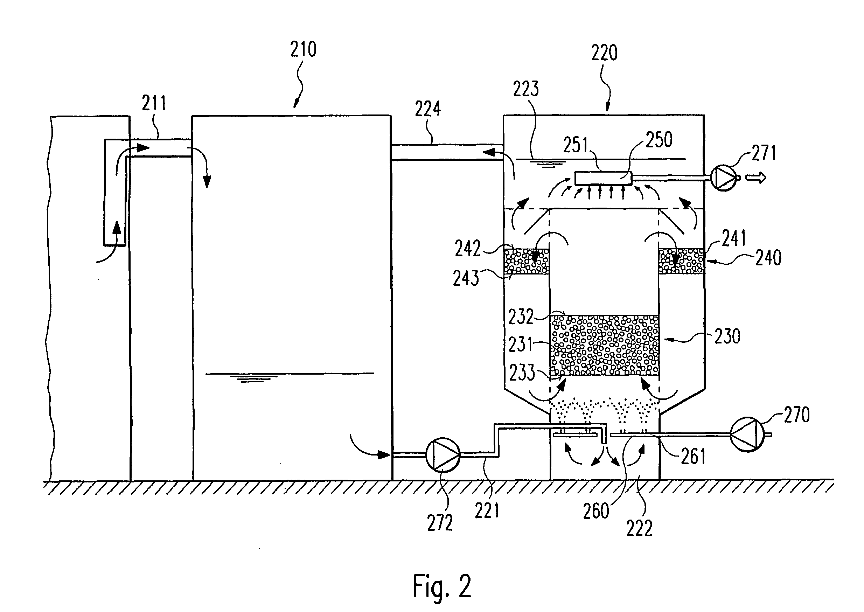

In Fig. 2 wird ein Stapelbehälter 210 über ein Zulauf 211 von einem Fettabscheider mit fetthaltigem Abwasser beschickt. An den Stapelbehälter 210 schließt sich ein Reaktorbehälter 220 an, welcher über eine Einlaufleitung 221 mit Abwasser vom Stapelbehälter 210 versorgt wird. In dem Reaktorbehälter 220 befindet sich eine erste Wirbelschicht 230, in welcher Festkörper 231 durch eine obere und untere Begrenzungsfläche 232, 233 gehalten werden.

Konzentrisch um den inneren Zylinder mit der ersten Wirbelschicht 230 ist eine zweite Wirbelschicht 240 im Reaktorbehälter 220 angeordnet. In dieser befinden sich wiederum Festkörper 241, welche durch eine obere und eine untere Begrenzungsfläche 242, 243, gehalten sind. Diese, nach unten durchströmten Festkörper können eine Dichte etwas unterhalb von 1 haben, was die Durchströmung begünstigt. Oberhalb dieser Anordnung und unterhalb eines Flüssigkeitsspiegels 223 im Reaktorbehälter 220 ist eine Entnahmeeinrichtung 250 mit einer Membran 251 angebracht. Bei Überschreiten des Flüssigkeitsspiegels 223 im Reaktorbehälter 220 kann dabei gereinigtes Abwasser über eine Rückführleitung 224 in den Stapelbehälter 210 zurückgelangen. Unterhalb der Wirbelschichten 230 und 240 im unteren Bodenbereich 222 des Reaktorbehälters 220 ist eine Gaseinführeinrichtung 260 mit Verteileinrichtungen 261 angeordnet, über welche ein feinperliger Gaseintrag in das Abwasser erfolgt. Zum Entnehmen des Klarwassers ist weiterhin eine Pumpeinrichtung 271, zum Zuführen des Abwassers eine Pumpeinrichtung 272 und zum Zuführen des Gases eine Pumpeinrichtung 270 vorgesehen.

Wie in Fig. 1 schon beschrieben, erzeugt der Gaseintrag über die Verteileinrichtungen 261 zusammen mit der Zuleitung des Abwassers in den unteren Bodenbereich 222 des Reaktorbehälters 220 eine aufsteigende Strömung, welche zunächst durch die Wirbelschicht 230 tritt. Ein Teilstrom des aus der Wirbelschicht 230 austretenden Abwassers wird schließlich zur Wirbelschicht 240 geführt und gelangt koaxial und entgegen dem aufsteigenden Abwasserstrom in den Bereich des Gaseintrags von der Gaseinführeinrichtung 260 zurück. Durch den innen liegenden Zylinder aus Stahlblech, in dem sich die Wirbelschicht 230 befindet, ergibt sich damit eine Kombination aus Wirbelschicht und Schlaufenreaktor. Das so gereinigte Abwasser gelangt über einen Teilstrom in den oberen Bereich des Reaktorbehälters 220 und wird über die Entnahmeeinrichtung 250 unter mechanischer Filterung durch die Membran 251 abgezogen. Die Füllkörper 231 der Wirbelschicht 230 werden durch den Aufwärtsstrom mitgerissen, wodurch Abwasser, Füllkörper 231 und 02 gründlich durchmischt werden. Der Abbau findet hier vor allem unter aeroben Bedingungen statt. In dem Bereich zwischen innerem Zylinder und äußerer Reaktorwand findet der Abbau dagegen unter Bedingungen statt, die mehr einem anaeroben Milieu gleichen. Anfallender Überschußschlamm wird vom Reaktorboden von der im Umkehrbetrieb laufenden Pumpeinrichtung 272 abgezogen und in den Stapelbehälter 210 gepumpt.

Grundsätzlich erlauben die Änderung der Anströmgeschwindigkeit (Zuströmgeschwindigkeit des Abwassers zum Reaktorbehälter 230 zusammen mit der Menge des Gaseintrages über die Gaszuführeinrichtung 160, 260), des Teilungsverhältnisses vom umlaufenden zum entnommenen Abwasserstromes, die Größe der Membranflächen 151, 251, die Füllhöhe der Wirbelschichten 130, 230, 240, die Füllkörpergröße 131, 231, 241 und deren Oberflächenbeschaffenheit eine weitere Anpassung der Leistungsfähigkeit des Hochleistungsreaktors an die Abwasserqualität, ohne die Dimensionen des Reaktors selbst zu ändern.

An dieser Stelle sei darauf hingewiesen, daß alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugsziffernliste

| Ziffer | Teil |
|---|---|
| 110;210 | Stapelbehälter |
| 111;211 | Zulauf |
| 120;220 | Reaktorbehälter |
| 121;221 | Einlaufleitung |
| 122;222 | Unterer Bodenbereich |
| 123;223 | Flüssigkeitsspiegel |
| 1.24; 224 | Rückführleitung |
| 130 | Wirbelschicht |
| 131;231,241 | Festkörper |
| 132,133;232,233,242,243 | Begrenzungsfläche |
| 150;250 | Entnahmeeinrichtung |
| 151;251 | Membran |
| 160;260 | Gaseinführeinrichtung |
| 161;261 | Verteileinrichtung |
| 170;270 | Pumpeinrichtung Gaszuführung |
| 171;271 | Pumpeinrichtung Entnahme |
| 172;272 | Pumpeinrichtung Abwasserzuführung |
| 230 | Erste Wirbelschicht |
| 240 | Zweite Wirbelschicht |

## Patentansprüche

1. Vorrichtung zur biologischen Abwasseraufbereitung, insbesondere zum Reinigen von Abwässern, die überwiegend mit Leichtstoffen, insbesondere Ölen und Fetten verunreinigt sind,
**umfassend**
- einen Stapelbehälter (110; 210) mit einem Zulauf (111; 211) zum Zuführen des Abwassers in den Stapelbehälter (110; 210);
- einen Reaktorbehälter (120; 220), umfassend eine Einlaufleitung (121; 221) zum Zuführen von Abwasser aus dem Stapelbehälter (110; 210) zu einem unteren Bodenbereich (122; 222) des Reaktorbehälters (120; 220);
- mindestens eine Wirbelschicht (130), die über dem unteren Bodenbereich (122; 222) angeordnet ist;
- eine Entnahmeeinrichtung (150; 250) zum Entnehmen von gereinigtem Abwasser;
- eine Rückführleitung (124; 224) zum Entnehmen von Flüssigkeit oberhalb der Wirbelschicht (130) und zum Zurückführen in den Stapelbehälter (110; 210);
- eine Gaseinführeinrichtung (160; 260) zum Einführen eines Gases, insbesondere von Luft unterhalb der Wirbelschicht (130),
**dadurch gekennzeichnet, dass**
die Entnahmeeinrichtung (150; 250) oberhalb der Wirbelschicht (130), aber unterhalb eines Flüssigkeitsspiegels (123; 223) im Reaktorbehälter (120; 220) angeordnet ist und dass die Wirbelschicht (130) in zwei, in vertikale Richtung voneinander getrennte Bereiche unterteilt und die Gaseinführeinrichtung (160; 260) unter einer ersten, von den Gasblasen und dem Abwasser nach oben durchströmten Wirbelschicht (230) für aeroben Abbau angeordnet ist und dass eine zweite, vom Abwasser nach unten durchströmte Wirbelschicht (240) für anaeroben Abbau vorgesehen ist.

2. Vorrichtung nach Anspruch 1,
**dadurch gekennzeichnet, dass**
die Wirbelschicht (130) eine Füllung aus Festkörpern (131) umfasst, die in einem umgrenzten Raum mit einer siebartigen oberen und/oder unteren Begrenzungsfläche (132, 133) gehalten sind.

3. Vorrichtung nach Anspruch 2,
**dadurch gekennzeichnet ,dass**
die Festkörper (131) als Bewuchsflächen, insbesondere als Kunststoffkörper ausgebildet sind.

4. Vorrichtung nach Anspruch 3,
**dadurch gekennzeichnet, dass**
die Dichte der Festkörper (131) nur wenig größer als 1 [g/cm³] ist.

5. Vorrichtung nach Anspruch 2,
**dadurch gekennzeichnet, dass**
die Begrenzungsfläche (132, 133; 232, 233, 242, 243) als Lochblech ausgebildet ist.

6. Vorrichtung nach einem der vorhergehenden Ansprüche,
**dadurch gekennzeichnet, dass**
die erste und die zweite Wirbelschicht (230, 240) konzentrisch zueinander verlaufen.

7. Vorrichtung nach einem der vorhergehenden Ansprüche,
**dadurch gekennzeichnet, dass**
die Entnahmeeinrichtung (150;250) eine vom gereinigten Abwasser durchströmbare Membran (151;251) umfasst.

8. Vorrichtung nach Anspruch 7,
**dadurch gekennzeichnet, dass**
die Entnahmeeinrichtung (150; 250) Pumpeinrichtungen zur Erzeugung eines Unterdruckes auf einer stromabwärts liegenden Seite der Membran umfasst.

9. Vorrichtung nach Anspruch 8,
**dadurch gekennzeichnet, dass**
die Pumpeinrichtung Strömungsumkehreinrichtungen zum Rückspülen der Membran umfasst.

10. Vorrichtung nach einem der vorhergehenden Ansprüche,
**dadurch gekennzeichnet, dass**
die Gaseinführeinrichtung (160; 260) Verteileinrichtungen (161; 261), die insbesondere als Membran ausgebildet sind, und Pumpeinrichtungen (170; 270) zum Zuführen von Luft umfasst.

11. Vorrichtung nach einem der vorhergehenden Ansprüche,
**gekennzeichnet durch**
Pumpeinrichtungen (172; 272) zum Zuführen des Abwassers vom Stapelbehälter (110; 210) zum Reaktorbehälter (120; 220).

12. Vorrichtung nach einem der vorhergehenden Ansprüche,
**gekennzeichnet durch**
eine Schlammabzugseinrichtung zum Abziehen von Schlamm vom Bodenbereich des Reaktorbehälters (120; 220) und zu dessen Abführung insbesondere in den Stapelbehälter (110; 210).

## Claims

1. Device for the biological treatment of waste water, in particular for the purification of sewage, which is largely contaminated with light materials, in particular oils and fats, comprising
- a stacking tank (110; 210) with a feed (111; 211) for delivering the waste water to the stacking tank (110; 210);
- a reactor tank (120; 220), comprising an intake pipe (121; 221) for delivering waste water from the stacking tank (110; 210) to a lower base area (122; 222) of the reactor tank (120; 220);
- at least one fluidised bed (130), which is arranged above the lower base area (122; 222);
- an abstraction device (150; 250) for abstracting purified waste water;
- a return pipe (124; 224) for abstracting liquid above the fluidised bed (130) and for returning it to the stacking tank (110; 210);
- a gas introduction device (160; 260) for introducing a gas, in particular air below the fluidised bed (130),
**characterised in that**
the abstraction device (150; 250) is arranged above the fluidised bed (130) but below a level of liquid (123; 223) in the reactor tank (120; 220) and that the fluidised bed (130) is divided into two areas separated from each other in a vertical direction and the gas introduction device (160; 260) is arranged for aerobic breakdown below a first fluidised bed (230), through which the gas bubbles and the waste water pass, and that a second fluidised bed (240), through which waste water passes downwards, is provided for anaerobic breakdown.

2. Device according to Claim 1,
**characterised in that**
the fluidised bed (130) comprises a filling made of solids (131), which are contained in a defined space with a sieve-type upper and/or lower defining surface (132; 133).

3. Device according to Claim 2,
**characterised in that**
the solids (131) are configured as growth surfaces, in particular synthetic bodies.

4. Device according to Claim 3,
**characterised in that**
the density of the solids (131) is only slightly greater than 1 [g/cm³].

5. Device according to Claim 2,
**characterised in that**
the defining surface (132, 133; 232, 233; 242, 243) is configured as a perforated plate.

6. Device according to one of the previous claims,
**characterised in that**
the first and the second fluidised bed (230; 240) are concentric to each other.

7. Device according to one of the previous claims,
**characterised in that**
the abstraction device (150; 250) comprises a membrane (151; 251) through which purified waste water passes.

8. Device according to Claim 7,
**characterised in that**
the abstraction device (150; 250) comprises pump mechanisms for producing a negative pressure on one side of the membrane lying downstream.

9. Device according to Claim 8,
**characterised in that**
the pump mechanism comprises current reversal devices for backflushing the membrane.

10. Device according to one of the previous claims,
**characterised in that**
the gas introduction device (160; 260) comprises valve elements (1G1; 261), which are configured in particular as a membrane, and pump mechanisms (170; 270) for supplying air.

11. Device according to one of the previous claims,
**characterised by**
pump mechanisms (172; 272) for delivering the waste water from the stacking tank (110; 210) to the reactor tank (120; 220).

12. Device according to one of the previous claims,
**characterised by**
a sludge drain device for drawing off sludge from the base area of the reactor tank (120; 220) and for discharging it in particular into the stacking tank (110; 210).

## Revendications

1. Dispositif pour le traitement biologique d'eaux usées, en particulier pour l'épuration d'eaux usées, qui sont contaminées principalement par des substances légères, en particulier des huiles et des graisses,
comprenant
- un récipient collecteur (110 ; 210) comportant un conduit d'arrivée (111 ; 211) pour l'introduction des eaux usées dans le récipient collecteur (110 ; 210) ;
- un récipient réacteur (120 ; 220), comprenant un conduit d'arrivée (121 ; 221) pour l'introduction des eaux usées provenant du récipient collecteur (110 ; 210) dans une zone inférieure du fond (122 ; 222) du récipient réacteur (120 ; 220) ;
- au moins un lit fluidisé (130) qui est disposé au-dessus de la zone inférieure de fond (122 ; 222) ;
- un dispositif de prélèvement (150 ; 250) pour le prélèvement de l'eau usée une fois épurée ;
- un conduit de recyclage (124 ; 224) pour le prélèvement de liquide au-dessus du lit fluidisé (130) et pour le recyclage dans le récipient collecteur (110 ; 210) ;
- un dispositif d'introduction de gaz (160 260) pour l'introduction d'un gaz, en particulier d'air, au-dessous du lit fluidisé (130),
**caractérisé en ce que** le dispositif de prélèvement (150 ; 250) est placé au-dessus du lit fluidisé (130), mais au-dessous d'un niveau du liquide (123 ; 223) dans le récipient réacteur (120 ; 220) et **en ce que** le lit fluidisé (130) est divisé en deux zones séparées l'une de l'autre dans le sens vertical et le dispositif d'introduction de gaz (160 ; 260) est placé au-dessous d'un premier lit fluidisé (230), traversé vers le haut par les bulles de gaz et les eaux usées, pour la dégradation aérobie, et **en ce qu'**un deuxième lit fluidisé (240), traversé par les eaux usées vers le bas, est prévu pour la dégradation anaérobie.

2. Dispositif selon la revendication 1, **caractérisé en ce que** le lit fluidisé (130) comprend un garnissage de corps solides (131) qui sont maintenus dans un espace limité par une surface limitante inférieure et/ou supérieure (132, 133) de type tamis.

3. Dispositif selon la revendication 2, **caractérisé en ce que** les corps solides (131) sont constitués de surfaces permettant la croissance, en particulier de corps en matière plastique.

4. Dispositif selon la revendication 3, **caractérisé en ce que** la densité des corps solides (131) n'est que légèrement supérieure à 1 [g/cm³].

5. Dispositif selon la revendication 2, **caractérisé en ce que** la surface limitante (132, 133 ; 232, 233, 242, 243) est constituée d'une tôle perforée.

6. Dispositif selon l'une quelconque des revendications précédentes, **caractérisé en ce que** les premier et deuxième lits fluidisés (230, 240) sont concentriques.

7. Dispositif selon l'une quelconque des revendications précédentes, **caractérisé en ce que** le dispositif de prélèvement (150 ; 250) comprend une membrane (151 ; 251) traversée par l'eau usée une fois épurée.

8. Dispositif selon la revendication 7, **caractérisé en ce que** le dispositif de prélèvement (150 ; 250) comprend des dispositifs de pompage destinés à engendrer une dépression sur une face, située en aval, de la membrane.

9. Dispositif selon la revendication 8, **caractérisé en ce que** le dispositif de pompage comprend des dispositifs d'inversion de l'écoulement pour le lavage à contre-courant de la membrane.

10. Dispositif selon l'une quelconque des revendications précédentes, **caractérisé en ce que** le dispositif d'introduction de gaz (160 ; 260) comprend des diffuseurs (161 ; 261) qui sont constitués en particulier sous forme de membrane, et des dispositifs de pompage (170 ; 270) pour l'introduction d'air.

11. Dispositif selon l'une quelconque des revendications précédentes, **caractérisé par** des dispositifs de pompage (172 ; 272) destinés à conduire les eaux usées du récipient collecteur (110 ; 210) au récipient réacteur (120 ; 220).

12. Dispositif selon l'une quelconque des revendications précédentes, **caractérisé par** un dispositif d'extraction de boues, pour l'extraction de la boue de la zone du fond du récipient réacteur (120 ; 220) et son évacuation en particulier dans le récipient collecteur (110 ; 210).
